# EUROPEAN PATENT SPECIFICATION

(11) **EP 3 508 324 B1**
(45) Date of publication and mention of the grant of the patent: **10.08.2022**
(21) Application number: 19150038.8
(22) Date of filing: 02.01.2019
(51) Int. Cl.: B29C 48/025, B29C 48/305

(54) **CO-EXTRUSION PLANT AND METHOD**
COEXTRUSIONSANLAGE UND -VERFAHREN
INSTALLATION ET PROCÉDÉ DE CO-EXTRUSION

(30) Priority: 03.01.2018 IT 201800000476
(43) Date of publication of application: 10.07.2019
(73) Proprietor: Lacoplast.IT SRL, 31020 San Fior (TV) (IT)
(72) Inventor: GASPARINI, Bruno, 31020 San Fior (Treviso) (IT)
(74) Representative: De Bortoli, Tiziano

(56) References cited:
- EP-A1- 0 618 059
- EP-A2- 0 385 942
- EP-B1- 0 618 059
- WO-A2-2012/071490
- US-A- 3 254 400
- US-A- 3 535 409
- US-A- 4 435 141
- US-A- 5 429 856
- US-A1- 2006 076 071
- US-A1- 2016 155 539
- US-B1- 7 163 652

## Description

### Technical field of the invention

The present invention relates to a co-extrusion plant and method, in particular for the improved co-extrusion of multiple profiles.

### Background of the invention

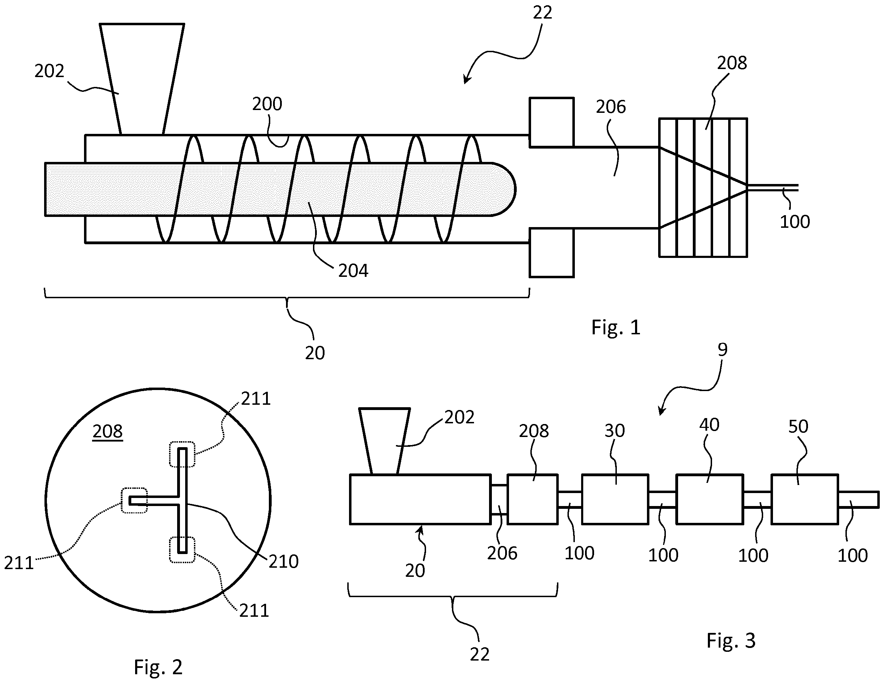

Extrusion and co-extrusion processes are well-known, in particular in the sector for the processing of polymeric materials, such as thermoplastic materials, elastomer materials and thermoplastic elastomers. In order to facilitate understanding of the invention, the prior art will be described briefly below, with reference to Figures 1 to 11 attached hereto.

Extrusion is a technological process suitable for the production of long elements, referred to below as "profiles" and indicated by 100 in the attached figures. The profiles have a substantially constant cross-section and length which is undefined beforehand. The cutting frequency determines the length of the end product. In its basic form, extrusion involves the use of an extrusion unit 22, which is shown schematically in Figure 1.

The extrusion unit 22 comprises an extruder 20 and, downstream of the extruder 20, a feed channel 206 and a die 208. The extruder 20 generally comprises a cylinder 200, a hopper 202, an extrusion screw 204 and heating means (not shown).

The extruder 20 also comprises other parts such as a motor, a mechanical transmission, a speed reducer, control circuits, etc. Typically the extruder 20 also comprises a system for cooling the first part of the cylinder 200, for example by means of fans. Since, however, these parts are of no interest for the present description they will not be described below. Hereinbelow reference will be made, for simpler illustration, to an extrusion screw 204, this expression including all the known solutions which are suitable for carrying out the same identical functions. Known examples are a single-thread endless screw, a barrier screw, a pair of co-rotating screws, a pair of counter-rotating screws, etc.

Moreover, the term "cylinder" is not understood merely as meaning an element with a cylindrical form, but also other forms, known per se to the person skilled in the art. Furthermore, reference will made for the sake of simplicity to a hopper 202, although other solutions for feeding the cylinder are possible, such as a gravimetric metering device, a volumetric feeding device, etc.

The die 208 is usually formed by means of a series of plates in order to facilitate the production thereof and the assembly and disassembly steps. This feature is schematically shown in the attached figures.

In the present state of the art, however, constructional forms in which the die is not formed by a series of plates are known.

Also known are more complex extrusion units which envisage the presence of other elements, such as filters or gear pumps for controlling the flow of the melted polymer.

In brief, the operation of the extrusion unit 22 in its basic form is as follows. The rough polymeric material, which is usually in form of granules or pellets, is fed to the hopper 202 and from here enters into the cylinder 200. The rotation of the extrusion screw 204 pushes the mass of polymeric material towards the feed channel 206 and, at the same time, heats it mechanically. Heating of the polymer is further ensured by the heating means which are located around the cylinder 200. In this way the polymeric material is melted, generating a pressurised mass with the appropriate fluid dynamic properties. The rotation of the extrusion screw 204 pushes the melted material along the cylinder 200 and then into the feed channel 206, as far as the die 208. Here the pressurised melted polymeric material is obliged to pass out through a shaped opening 210 - shown in Figure 2 - which is provided in the die 208, assuming approximately the cross-sectional form thereof.

The form of the shaped opening depends on the design specifications; the T-shaped form shown in Figure 2 is to be regarded as an example. This approach applies to all the shaped openings 210 described in the present document.

Figure 3 shows in schematic form a generic extrusion plant 9 of the known type. As can be noted, downstream of the extrusion unit 22, the extrusion plant 9 usually comprises other processing stations.

Preferably, in the extrusion plant 9 there is a calibration station 30 which is configured to finish the outer surface of the profile 100 and define more precisely the cross-section thereof. In fact, as mentioned above, when the profile 100 leaves the die 208, it maintains more or less the form of the shaped opening 210. In particular, in the conditions which are present at the outlet of the die 208, various factors influence the polymeric material, causing it to change form. These factors include blowing at the die outlet, also said swelling, which is to be attributed, for example, to recovery of the shape after passing through the die, in the case of polymeric materials which have a viscoelastic behaviour. In general, the calibration station 30 is therefore necessary if it is required to define further the cross-section of the profile 100 and improve the surface finish thereof.

A cooling station 40, configured to cool the polymeric material to a temperature sufficiently low to consolidate the profile 100, is preferably provided downstream of the calibration station 30.

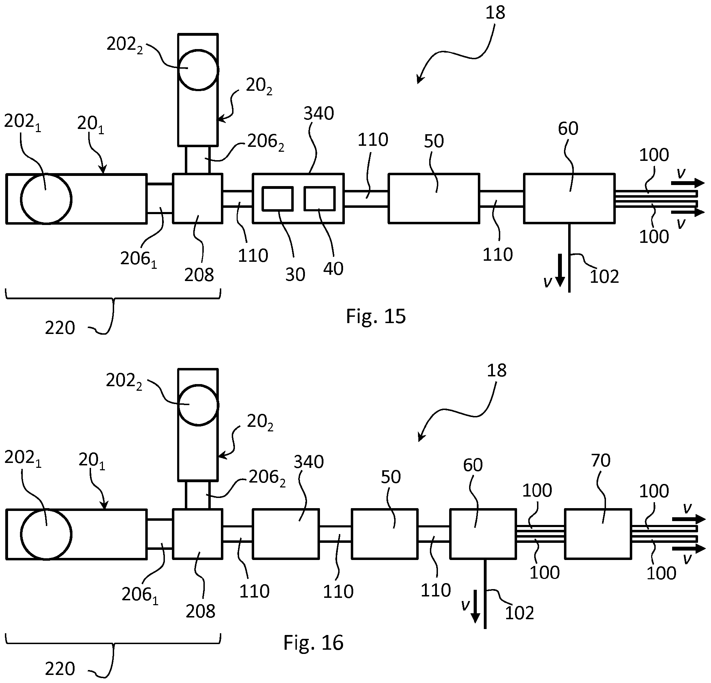

These two stations may be combined in a single calibration and cooling station, denoted by 340 in Figure 15, which shows in schematic form a co-extrusion plant according to an embodiment of the present invention.

Downstream of the cooling station there is usually a pulling station 50 which is configured to apply a pulling force to the profile 100 so as to keep the profile 100 straight and move it along the extrusion line.

Other stations (not shown in Figure 3) which may be present in an extrusion plant 9 of the known type are stations for marking the profiles, for example by means of tampography or hot film up-and-down printing and/or stations for carrying out other specific processing operations required (punching, hole-drilling, hot film application, metal foil application, etc.). Typically a cutting station is also present.

A particular variant of extrusion is co-extrusion where at least two different materials are fed to a single die 208 in order to produce by means of a single operation a profile comprising portions made of different materials.

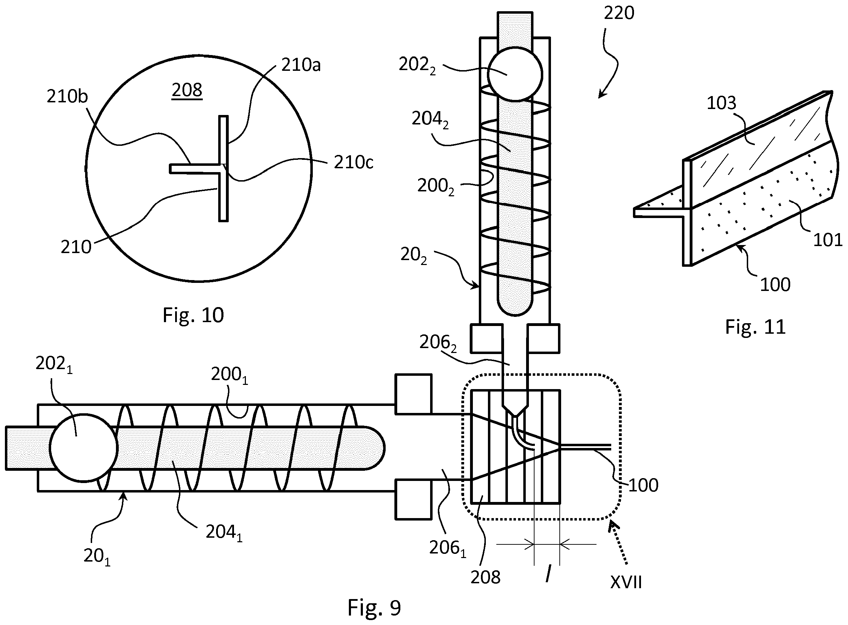

In its simplest form the co-extrusion unit 220, which is shown in schematic form in Figure 9, comprises essentially two extruders 20₁ and 20₂. Each extruder 20₁ and 20₂ comprises a cylinder 200₁, 200₂, a hopper 202₁, 202₂, an extrusion screw 204₁, 204₂ and heating means (not shown). Both the extruders 20₁ and 20₂ converge in a single die 208 via the corresponding feed channels 206₁ and 206₂.

The flow of the two materials in the melted state has been designed so that these, inside the die 208, remain in contact with each other for the time needed to establish a structural bond.

A generic profile 100 obtained by means of co-extrusion is shown in schematic form in Figure 11, in which two portions 101 and 103 obtained with different materials are shown. This profile 100 is obtained by means of a die 208, shown in detail in Figure 9, the shaped opening 210 of which, shown in Figure 10, comprises a first working zone 210a and a second working zone 210b, which are virtually separated from each other by a line 210c, which represents the zone of discontinuity between the different materials which form the portions 101 and 103 of the profile 100. In particular, the portion 103 of the profile 100 is obtained by means of extrusion of one of the two materials through the working zone 210a of the shaped opening 210, while the portion 101 of the profile 100 is obtained by means of extrusion of the other one of the two materials through the working zone 210b of the shaped opening 210. Profiles of this type may be used for example in situations where the particular characteristics of the different materials are to be exploited. For example, a first material (portion 101) with better structural performance features may be combined with a second softer material (portion 103). The second material is therefore more suitable for performing the function of a seal and/or increasing locally the friction in a form coupling for which the profile 100 is intended. Irrespective as to the materials used, during the manufacture of a profile by means of co-extrusion it is important to ensure that the two materials form, in the interface zone between them, a structural bond which allows the profile to behave as though it were a single piece.

The diagram of Figures 9 clearly illustrates, for greater clarity, the lengthwise section / along which contact between the two materials occurs. In reality the section or zone of contact between the two materials is much shorter than that which is shown in Figure 9. In case the die 208 is a plate die, typically the contact zone is contained completely in the last plate. For example, in the case of thin-section co-extruded profiles, such as the extruded C-shaped edge pieces for the glass shelves in fridges (commonly called "glass trims") with a soft grip, the length *l* of the contact zone is of the order of a millimetre.

A critical aspect of the known extrusion and co-extrusion processes is that of ensuring the optimum adjustment of the processing parameters. This adjustment is intended to obtain a profile 100 which has a cross-section which complies with the design specification.

The problem of adjusting the processing parameters is related to the fact that the fluid dynamics inside the extrusion unit 22 is extremely complex. The melted polymeric material is typically a non-Newtonian fluid. Moreover, in the processing sector for these materials, the load losses depend substantially on the geometrical form of the channel inside which the melted material flows. Furthermore, the friction which arises between the melted polymeric material and the walls along which it flows (for example walls of the cylinder 200, the feed channel 206 and the die itself 208) depends on the orientation and the roughness of the said walls, which roughness may vary for example depending on the surface finish, etc. This roughness may vary over time, for example owing to friction and abrasion factors.

As a result of all this, something which may easily happen is that the material does not manage to flow with the same ease through all the zones of the shaped opening 210. This occurs in particular in the more peripheral zones, which are indicated by 211 in Figure 2 and which are commonly called the "legs" of the profile. Here the melted material flows along three fixed walls and this, for the same pressure present in the mass of the material, results in a greater resistance. The end effect of this is that the legs of the profile receive less material and, once the profile has cooled, they prove to be shorter and/or have a thickness smaller than that indicated in the design specification.

A known solution to this problem consists in providing, around the plates of the die 208, special resistances (not shown) which are configured to heat locally the walls of the die. In this way the resistance generated by the friction between the melted polymeric material and the walls may be modified. This solution, although effective, involves a long set-up procedure during which, in order to obtain the correct final dimensions of the profile 100, each of the legs 211 of the shaped opening 210 must be considered. This set-up procedure is time-consuming and results in the production of a reject profile with legs which are at least partly irregular.

Another critical aspect is often associated with the capacity, in terms of hourly throughput of material, of the different machines.

More particularly, and with reference to the extrusion plant 9 shown in Figure 3, often the operating capacity of the single die 208 is markedly less than the nominal capacity of the extruder 20. This results in a major bottleneck in the production capacity of the entire plant 9 and wastage of resources which remain unused. This point is of particular importance in the case of thin-thickness profiles, such as the above-mentioned glass trims. This aspect is often important also for the known co-extrusion plants.

In order to solve this further problem two solutions are known.

A first solution (shown schematically in Figure 4) envisages using special dies 208 comprising a plurality of shaped openings 210 (two in the example of Figures 4 and 5). In this way the operation of only one extruder 20 allows the simultaneous production of several profiles 100. A second solution (shown schematically in Figure 6) envisages using a special branched feed channel 206 (duplicated in the example of Figure 6) which feeds a plurality of conventional dies 208, each comprising a single shaped opening 210 (see Figure 7). The branched feed channel 206 typically has a system of resistances (not shown) for heating the fluid mass and thus adjusting the flows thereof in the branches of the feed channels 206. In this way also the operation of the single extruder 20 allows the simultaneous production of several profiles 100.

These known systems, however, while allowing the capacity of the extruder 20 to be better exploited, are not without drawbacks.

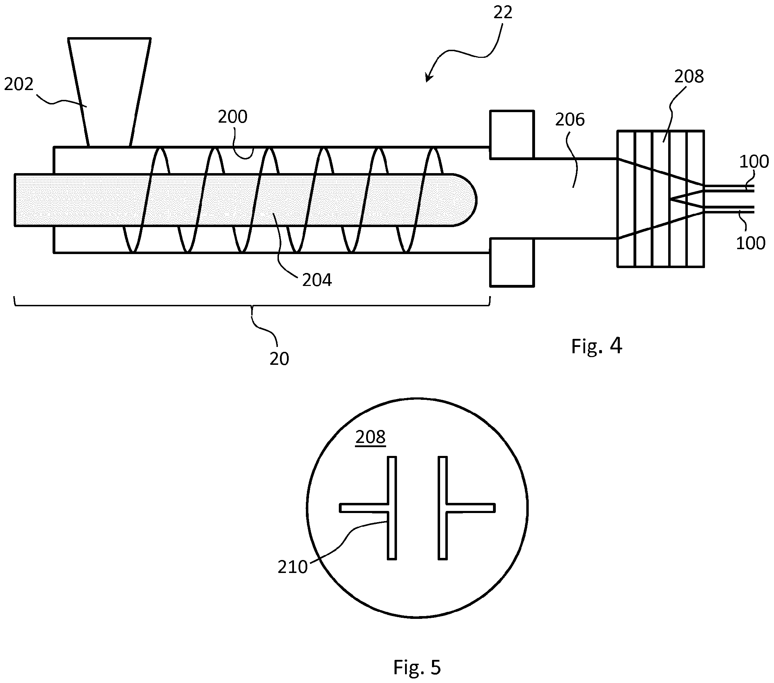

The fluid dynamics inside the extrusion unit 22 shown in Figures 4 to 6 are so complex that it is extremely difficult to ensure that profiles 100 produced simultaneously, in the case of multiple profile extrusion, are output at the same speed from the die or dies 208.

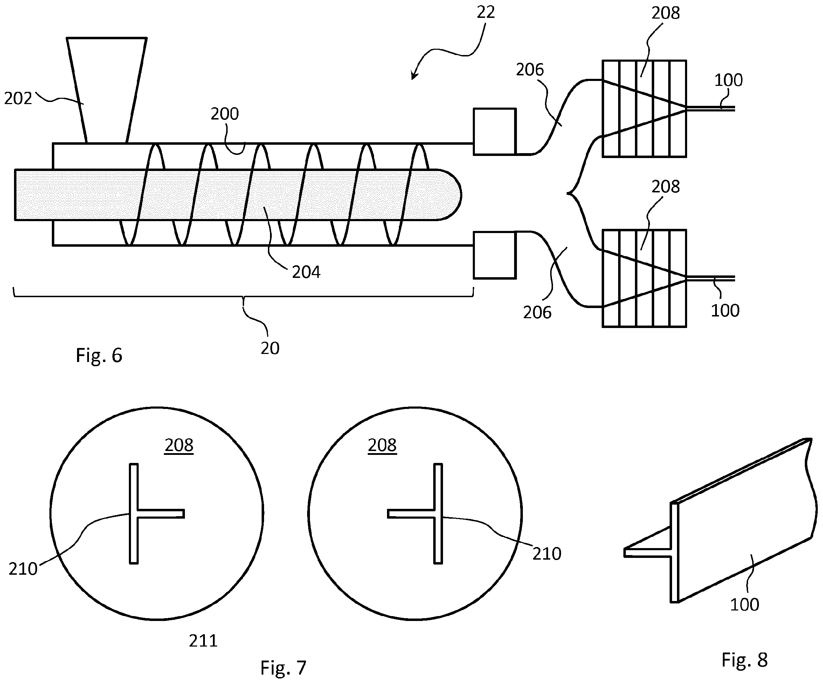

In other words, the two profiles 100 shown in Figures 4 or 6 will assume, per unit of time, different lengths. In practice this results in the need to multiply all or part of the production line situated downstream of the extrusion unit 22 so as to provide dedicated processing stations for each profile 100, although all the stations (for performing calibration, cooling, pulling, marking, cutting, etc.) could easily handle several profiles at the same time. Typically the calibration station 30, cooling station 40 and pulling station 50 may be shared, although sharing the downstream stations intended for secondary processing operations, such as punching, marking, milling, cutting, etc., is complicated. By way of example, the aforementioned glass trims may be cited again; these glass trims have very small tolerances with regard to their length, even as small as 0.1 mm. Respecting this tolerance in a single cutting station, in the case where glass trims are produced using the known multiple profile extrusion techniques, is extremely difficult since the profiles 100 do not have the same speed. US 4 435 141 A and EP 0 618 059 A1 disclose an extrusion device according to the prior art. US 7 163 652 B1 discloses a process for making co-extruded profiles according to the prior art.

The object of the present invention is therefore to overcome at least partially the drawbacks mentioned above with reference to the prior art.

In particular a task of the present invention is to provide a co-extrusion plant and method which facilitate the setting-up of the processing parameters compared to the prior art. Moreover, a task of the present invention is to provide a co-extrusion plant and method which, while allowing the extruder capacity to be fully exploited, do not require multiplication of all or part of the production line situated downstream thereof.

The aforementioned object and tasks are achieved by a co-extrusion plant according to Claim 1 and by a co-extrusion method according to Claim 10.

### Brief description of the drawings

The features and further advantages of the invention will emerge from the description, provided hereinbelow, of a number of embodiments, provided by way of a non-limiting example, with reference to the attached drawings. In these drawings:
- Figure 1 shows in schematic form a side view of a first type of extrusion unit according to the prior art;
- Figure 2 shows in schematic form a front view of the die included in the extrusion unit according to Figure 1;
- Figure 3 shows in schematic form a side view of an extrusion plant according to the prior art;
- Figure 4 shows in schematic form a side view of a second type of extrusion unit according to the prior art;
- Figure 5 shows in schematic form a front view of the die included in the extrusion unit of Figure 4;
- Figure 6 shows in schematic form a side view of a third type of extrusion unit according to the prior art;
- Figure 7 shows in schematic form a front view of the dies included in the extrusion unit of Figure 6;
- Figure 8 shows in schematic form a finished profile produced with the extrusion unit according to Figure 1, Figure 4 or Figure 6;
- Figure 9 shows in schematic form a plan view of a co-extrusion unit according to the prior art;
- Figure 10 shows in schematic form a front view of the die included in the co-extrusion unit of Figure 9;
- Figure 11 shows in schematic form a finished profile produced with the co-extrusion unit of Figure 9;

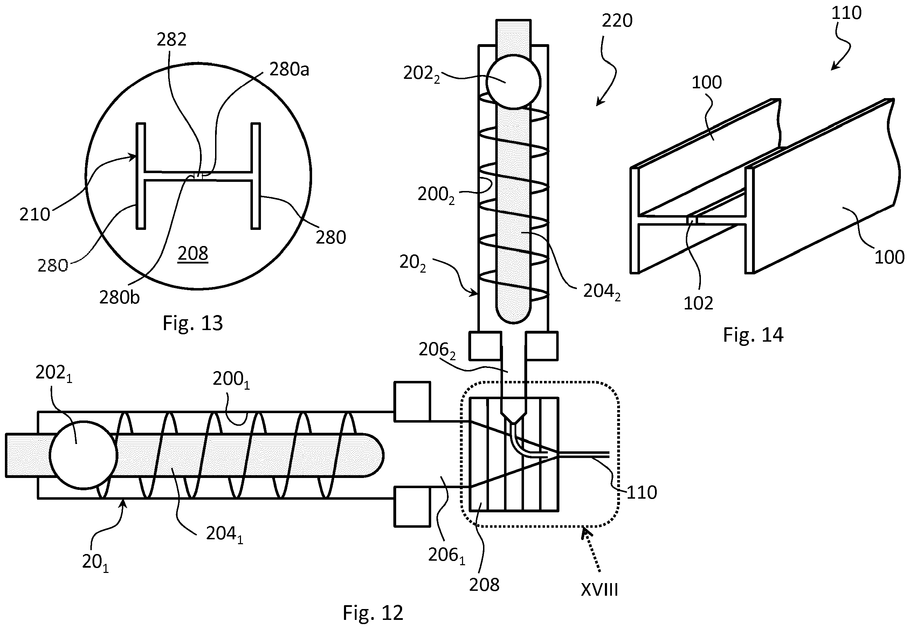

- Figure 12 shows in schematic form a plan view of a co-extrusion unit of a co-extrusion plant according to the invention;
- Figure 13 shows in schematic form a front view of the plate die included in the co-extrusion unit of Figure 12;
- Figure 14 shows in schematic form a semi-finished multiple profile produced with the co-extrusion unit of Figure 12;
- Figure 15 shows in schematic form a plan view of a first co-extrusion plant according to the invention;
- Figure 16 shows in schematic form a plan view of a second co-extrusion plant according to the invention;

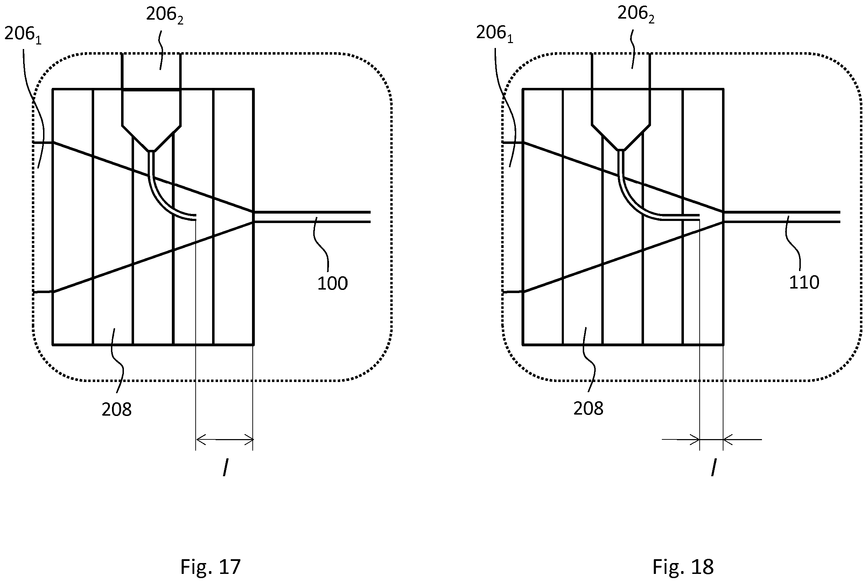

- Figure 17 shows an enlarged view of the detail indicated by XVII in the co-extrusion unit of Figure 9;
- Figure 18 shows an enlarged view of the detail indicated by XVIII in the co-extrusion unit of Figure 12; and

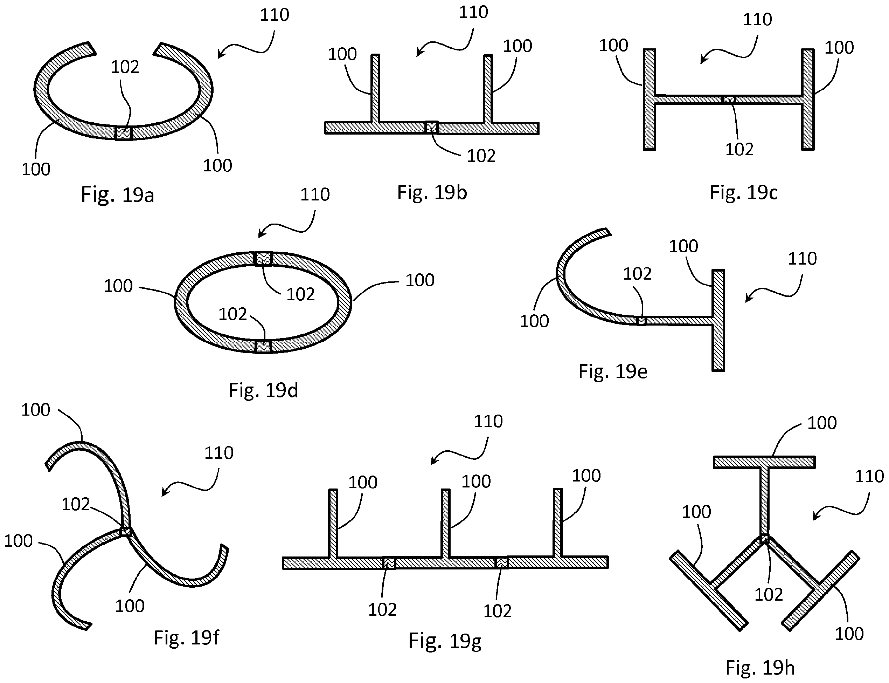

- Figures 19a-19b show in schematic form examples of possible semi-finished multiple profiles which may be produced with the co-extrusion plant according to the invention.

### Description of preferred embodiments of the invention

With reference to Figures 12 to 14 these show a co-extrusion unit 220 of a plant for the co-extrusion of at least two separate profiles 100 according to a preferred embodiment of the present invention.

In its basic form, the co-extrusion unit, which is denoted overall by the reference number 220, is configured to extrude an end product, i.e. profile 100, made of a single material, and comprises a main extruder 20₁ configured to extrude a first polymeric material, a secondary extruder 20₂ configured to extrude a second polymeric material, a main feed channel 206₁, a secondary feed channel 206₂ and a plate die 208.

In the co-extrusion unit 220 the main feed channel 206₁ connects the main extruder 20₁ to the plate die 208 and the secondary feed channel 206₂ connects the secondary extruder 20₂ to the plate die 208.

The plate die 208 comprises internal channels and a shaped opening 210, shown in Figure 13, and the shaped opening 210 of the die 208 comprises at least two working zones 280 configured to define a corresponding number of profiles 100 and at least one service zone 282 situated between the working zones 280 and configured to define at least one disposable bead 102. In Figure 13, the service zone 282 is separated virtually from the working zones 280 by a pair of lines 280a and 280b which represent the zone of discontinuity between the materials which form the portions 100 and 102 of the profile 110.

The main feed channel 206₁ and the internal channels of the die 208 are configured to feed the first polymeric material to the at least two working zones 280 and the secondary feed channel 206₂ and the internal channels of the die are configured to feed the second polymeric material to the at least one service zone 282.

In this way, the shaped opening 210 as a whole is configured to define a semi-finished multiple profile 110, shown in detail in Figure 14, comprising at least two profiles 100, made of the first polymeric material and joined together by at least one disposable bead 102 made from the second polymeric material.

Preferably, the first polymeric material which forms the profiles 100 of the semi-finished multiple profile 110 and the second polymeric material which forms the disposable bead 102 are different polymeric materials. Alternatively, the first polymeric material and the second polymeric material are the same polymeric materials.

In accordance with the invention, the co-extrusion unit 220 is configured to ensure that the first polymeric material and the second polymeric material adhere together in the semi-finished multiple profile 110 without forming a structural bond. The structural bond depends on the degree of adhesion between the materials.

As is well-known to a person expert in co-extrusion technology, the degree of adhesion depends on many parameters, some of which in turn are very complex, for which reason this particular aspect is overall very difficult to evaluate a priori.

Below a number of important parameters which influence the degree of adhesion between the two co-extruded polymer-based materials are listed:
a) extension of the interface between the two materials (both for materials in the melted state, i.e. when the adhesion process is in progress, and for cooled materials, i.e. when the adhesion process has terminated;
b) chemical-physical compatibility of the materials;
c) contact time inside the die 208 (the contact time depends in turn on the length / and the speed of flow of the materials;
d) contact time outside the die 208 until cooling occurs;
e) process temperature;
f) process pressure.

As the person skilled in the art may easily understand from the parameters listed above, the definition of the degree of adhesion between two co-extruded materials is a very complex aspect. In particular, the same degree of adhesion may be obtained in different ways, i.e. with different combinations of the parameters mentioned above.

An example of a solution may be understood by comparing Figures 17 and 18.

Figure 17 is an enlarged view of the detail indicated by XVII in Figure 9 and shows in schematic form the die 208 of a co-extrusion unit according to the prior art. Figure 18 is an enlarged view of the detail indicated by XVIII in Figure 12 and shows in schematic form the die 208 of a co-extrusion unit according to the invention.

In these figures, *l* indicates the length of the section along which the two polymeric materials remain in contact with each other inside the die 208.

As can be noted from the comparison between the two figures, the length / of the contact section between the polymeric materials of the die 208 of the extrusion unit 220 according to the invention is decidedly smaller than the length *l* of the contact section between the two polymeric materials of the die 208 of the extrusion unit 220 according to the prior art. A reduction in the length *l* implies, other parameters being equal, a reduction in the contact time inside the die 208 and therefore a reduction in the degree of adhesion between the two polymeric materials.

With particular reference to the aforementioned glass trims, the length *l* of the contact section between the polymeric materials varies between a value greater than zero and a value less than 5 mm.

In a further embodiment, one or more profiles 100 of the semi-finished multiple profile 110 may be made of more than one polymeric material, for example two polymeric materials.

Such a situation occurs, for example, in the case of the aforementioned glass trims, which typically comprise a rigid outer polymeric material, for example acrylonitrile-butadiene-styrene polymer and a softer inner polymeric material, for example a polymer compound based on styrene-ethylene-butadiene-styrene.

In this case, the co-extrusion unit 220 comprises a pair of main extruders 20₁, each of which is configured to extrude a corresponding first polymeric material through a respective feed channel 206i.

Alternatively, and in the case where the secondary extrusion unit 20₂ extrudes a second polymeric material different from the first polymeric material extruded by the main extrusion unit 20₁, instead of providing a second main extrusion unit 20₁, it is possible to use the secondary extrusion unit 20₂, which will be configured to extrude both a portion of the profile or the profiles 100 and the disposable bead 102.

The co-extrusion plant 18, shown in Figures 15 and 16, comprises a co-extrusion unit 220 configured to extrude a semi-finished multiple profile 110, in which the semi-finished multiple profile 110 comprises at least two profiles 100 made of at least one first polymeric material and joined together by at least one disposable bead 102 made of a second polymeric material.

In accordance with the invention, the co-extrusion plant 18 further comprises, downstream of the co-extrusion unit 220, a separation station 60 configured to remove the at least one disposable bead 102 from the semi-finished multiple profile, so as to separate from each other the at least two profiles 100.

The separation station 60 may for example impart to the disposable bead 102 a lateral pulling force with respect to the direction of the multiple profile 110. The lateral pulling force must be sufficient to remove the disposable bead 102 from the profile 110. The separation station 60 may comprise, for example, a motor-driven ratchet wheel (not shown) which winds up the disposable bead 102, preferably ensuring that the disposable bead 102 has the same speed v at which the multiple profile 110 moves. The separation of the disposable bead 102 may be facilitated by the presence of rigid elements, which facilitate the separation of the materials, such as steel blades or plastic wedges.

Alternatively, separation of the disposable bead 102 may occur due to rigid elements alone.

In accordance with an embodiment of the co-extrusion plant 18 according to the invention, the co-extrusion unit 220 included within it is of the type described above, i.e. is configured to ensure that the first polymeric material and the second polymeric material adhere together in the semi-finished profile 110 without forming a structural bond.

In case it is required to manufacture profiles 110 made of more than one polymeric material, as described above, the co-extrusion plant 220 may comprise a number of main extrusion units 201 equal to the number of polymeric materials present in the profile to be extruded. Alternatively, and in the case where the profile is made of two separate polymeric materials and the main extrusion unit 20₁ and the secondary extrusion unit 20₂ extrude different polymeric materials, it is possible to provide a single main extrusion unit 20₁ and use the second polymeric material of the secondary extrusion unit to extrude both a portion of the profile 100 and the disposable bead 102.

In accordance with other embodiments of the invention and as shown in Figures 15 and 16, the co-extrusion plant 18 may advantageously further comprise one or more of the following stations known per se:
- a calibration station 30, configured to finish the outer surface of the semi-finished multiple profile 110 and define more precisely the cross-section thereof;
- a cooling station 40, configured to cool the polymeric materials to a temperature sufficiently low to consolidate the semi-finished multiple profile 110; and
- a pulling station 50, configured to apply a pulling force to the semi-finished multiple profile 110.

The calibration station 30 and the cooling station 40 may be combined in a single calibration and cooling station 340, as mentioned above.

Furthermore, the co-extrusion plant 18 may advantageously comprise other stations (indicated generically by 70 in Figure 16) such as stations for marking the profiles, for example by means of tampography or hot film up-and-down printing and/or stations for performing other specifically required processing operations (punching, hole-drilling, film application, etc.). The co-extrusion plant typically comprises a cutting station.

The relative position of the pulling station 50, the separation station 60 and the generic stations 70 may be adapted to the various production requirements.

The invention also relates to a co-extrusion method, configured in particular for the continuous production of at least two separate profiles 100. The method according to the invention comprises the steps of:
- extruding a semi-finished multiple profile 110 comprising at least two profiles 100 made of at least one first polymeric material and joined together by at least one disposable bead 102 made of a second polymeric material, wherein the at least one first polymeric material and the second polymeric material adhere together along a contact section *l* within the plate die 208 having a length variable between a value greater than zero and a value of less than 5 mm so as not to form a structural bond in the semi-finished multiple profile in the semi-finished multiple profile; and
- removing by means of a lateral pulling action with respect to the direction of the semi-finished multiple profile the at least one disposable bead 102 from the semi-finished multiple profile 110 so as to obtain the at least two separate profiles 100.

Figures 19a-19h show finally various examples of semi-finished multiple profiles 110 obtained with the co-extrusion plant 18 according to the present invention.

In particular, Figures 19a-19c and 19e show multiple profiles 110 comprising two profiles 100 and a disposable bead 102, Figure 19d shows a multiple profile 110 comprising two profiles 100 and two disposable beads 102, Figures 19f to 19h show multiple profiles 110 comprising three profiles 100 and a disposable bead 102 and Figure 19g shows a multiple profile 110 comprising three profiles 100 and two disposable beads 102.

As mentioned above, the profiles 100 may be made of a single polymeric material or two or more polymeric materials. In both cases, the profiles 100 of the multiple profile 100 comply with the design specifications. Moreover, the polymeric material of the disposable bead 102 may be made of the same material or of one of the materials, in the case of profiles consisting of two or more polymeric materials from which the profiles 100 are made, or of a different polymeric material.

Advantageously, the method according to the invention may make use of all that described above in connection with the co-extrusion plant 18.

As the person skilled in the art may easily understand from the description provided above, the present invention achieves the object of overcoming at least partly the drawbacks mentioned with reference to the prior art.

In particular, the present invention provides a co-extrusion plant 18 and a co-extrusion method which facilitate the setting-up of the processing parameters compared to the prior art. In fact, the presence of each disposable bead 102 temporarily joins together two or more portions of the section, which otherwise would form a corresponding number of legs 211, in the sense explained in the introductory part of the present application. A substantial reduction in the number of legs is thus obtained compared to the known solutions for extrusion of multiple profiles, with the consequent simplification of the step for adjusting the processing parameters.

Moreover, the present invention provides a co-extrusion plant 18 and a co-extrusion method which, while allowing the extruder capacity of the extruder units to be fully exploited, do not require multiplication of all or part of the production line situated downstream thereof.

In fact, the co-extrusion unit 220 of the co-extrusion plant 18 according to the invention releases the semi-finished multiple profile 110 which, although it is multiple, is characterized by a single output speed, indicated by the arrows v in Figures 15 and 16. In fact the presence of the disposable bead 102 ensures the continuity of the material and the uniform behaviour of the profile section.

The continuity of the material is an advantage during the calibration step compared to the known technology for extrusion of multiple profiles. In fact, the extruded multiple profiles according to the prior art are separate from each other and therefore it is unlikely that they will be subject to the same friction with the surface of the shaping gauge and therefore may have a different stretched form and/or surface finish.

Irrespective of the position of the separation station 60 which removes the disposable bead 102, the profiles 100 maintain substantially the same speed v as the semi-finished multiple profile 110. Basically, therefore, it is no longer necessary to increase the number of stations 70 of the co-extrusion plant 18 because a single station for each type may perform the corresponding processing of the profiles 100 since they are perfectly synchronized with each other.

The person skilled in the art, in order to satisfy specific needs, may make modifications to the embodiments described above and/or replace the elements described with equivalent elements, without thereby departing from the scope of the attached claims.

## Claims

1. Co-extrusion plant (18) for extruding at least two separate profiles (100), comprising:
- a co-extrusion unit (220) for extruding a semi-finished multiple profile (110), comprising:
- at least one main extruder (20₁) configured to extrude a respective first polymeric material;
- a secondary extruder (20₂) configured to extrude a second polymeric material;
- at least one main feed channel (206₁);
- a secondary feed channel (206₂); and
- a plate die (208);
wherein the at least one main feed channel (206₁) connects a respective main extruder (20₁) to the plate die (208);
wherein the secondary feed channel (206₂) connects the secondary extruder (20₂) to the plate die (208);
wherein the plate die (208) comprises internal channels and a shaped opening (210);
wherein the shaped opening (210) of the plate die (208) comprises at least two working zones (280) configured to define a corresponding number of profiles (100) and at least one service zone (282) situated between the working zones (28) and configured to define at least one disposable bead (102);
wherein each main feed channel (206₁) and the internal channels of the plate die (208) are configured to feed the respective first polymeric material to the at least two working zones (280);
wherein the secondary feed channel (206₂) and the internal channels of the plate die (208) are configured to feed the second polymeric material to the at least one service zone (282); so that the shaped opening (210) as a whole is configured to define a semi-finished multiple profile (110) comprising at least two profiles (100), made of at least one first polymeric material and joined together by at least one disposable bead (102) made of a second polymeric material;
and
- a separation station (60) situated downstream of the co-extrusion unit (220) and configured to remove the at least one disposable bead (102) from the semi-finished multiple profile (110) by means of a lateral pulling action with respect to the direction of the semi-finished multiple profile (110) so as to obtain said at least two separate profiles (100);
**characterized in that** the at least one polymeric material for extrusion of the profiles (100) and the polymeric material for extrusion of the disposable bead (102) adhere together along a contact section (*l*) within the plate die (208) having a length variable between a value greater than zero and a value of less than 5 mm so as not to form a structural bond in the semi-finished multiple profile (110).

2. **.** Co-extrusion plant (18) according to Claim 1, wherein the co-extrusion unit (220) comprises two main extruders (20₁) each configured to extrude a respective first polymeric material and provided with a respective main feed channel (206₁), wherein said main feed channels (206₁) and said internal channels of the plate die (208) are configured to feed the first polymeric materials to said at least two working zones (280) of the shaped opening (210) so that the shaped opening (210) as a whole is configured to define a semi-finished multiple profile (110) comprising at least two profiles (100) which are made of different first polymeric materials and are joined together by at least one bead (102) made of the second polymeric material.

3. **.** Co-extrusion plant (18) according to Claim 1 or 2, wherein the first polymeric material extruded by said at least one main extruder (20₁) is different from the second polymeric material extruded by said secondary extruder (20₂).

4. **.** Co-extrusion plant (18) according to Claim 3, wherein the co-extrusion unit (220) comprises at least one main extruder (20₁) and wherein the feed channel (206₂) of the secondary extruder (20₂) and the internal channels of the plate die (208) are configured to feed the second polymeric material to said at least two working zones (280) of the shaped opening (210) so that the shaped opening (210) as a whole is configured to define a semi-finished multiple profile (110) comprising at least two profiles (100) which are made of different polymeric materials extruded by said at least one main extruder and by said secondary extruder and are joined together by at least one disposable bead (102) made of a second polymeric material extruded by said secondary extruder.

5. **.** Co-extrusion plant (18) according to Claim 1, wherein the first polymeric material extruded by said at least one main extruder (20₁) is the same as the second polymeric material extruded by said secondary extruder (20₂).

6. **.** Co-extrusion plant (18) according to any one of the preceding claims, wherein said at least two profiles (100) are thin profiles for electric household appliances, preferably glass trims.

7. **.** Co-extrusion plant (18) according to any one of the preceding claims, wherein said separation station (60) comprises a motor-driven ratchet wheel for winding up the disposable bead (102) removed from the semi-finished multiple profile (110).

8. **.** Co-extrusion plant (18) according to any one of the preceding claims, further comprising one or more of the following stations:
- a calibration station (30; 340) configured to finish the outer surface of the semi-finished multiple profile (110);
- a cooling station (40; 340), configured to cool the polymeric materials to a temperature sufficiently low to consolidate the semi-finished multiple profile (110); and
- a pulling station (50), configured to apply a pulling force to the semi-finished multiple profile (110),
wherein the calibration and cooling stations may be two separate stations (30,40) or combined in a single calibration and cooling station (340).

9. Co-extrusion plant (18) according to any one of the preceding claims, further comprising, downstream of said stations, a station for cutting to size said at least two separate profiles (100).

10. **.** Method for continuously co-extruding at least two separate profiles (100) performed using the co-extrusion plant (18) according to any one of the preceding claims, the method comprising the steps of:
- extruding a semi-finished multiple profile (110) comprising at least two profiles (100) made of at least one first polymeric material and joined together by at least one disposable bead (102) made of a second polymeric material, wherein said at least one first polymeric material and said second polymeric material adhere together along a contact section (*l*) within the plate die (208) having a length variable between a value greater than zero and a value of less than 5 mm so as not to form a structural bond in the semi-finished multiple profile (110); and
- removing by means of a lateral pulling action with respect to the direction of the semi-finished multiple profile (110) the at least one disposable bead (102) from the semi-finished multiple profile (110) so as to obtain said at least two separate profiles (100).

11. **.** Co-extrusion method according to Claim 10, wherein said extrusion step involves the extrusion of a semi-finished multiple profile (110) comprising at least two profiles (100) made of first polymeric materials which are the same or different and are joined together by at least one disposable bead (102) made of the second polymeric material.

12. **.** Co-extrusion method according to Claim 11, wherein said second polymeric material is the same as or different from said first polymeric materials.

13. **.** Method according to any one of Claims 10 to 12, further comprising one or more of the following steps:
- finishing the outer surface of the semi-finished multiple profile (110);
- cooling the semi-finished multiple profile (110) so as to cool the polymeric materials to a temperature sufficiently low to consolidate the semi-finished multiple profile (110); and
- exerting a pulling force on the semi-finished multiple profile (110).

14. **.** Method according to any one of Claims 10 to 13, further comprising, downstream of said steps, a further step of cutting to size said at least two separate profiles.

## Patentansprüche

1. Co-Extrusionsanlage (18) zum Extrudieren zumindest zweier separater Profile (100), aufweisend:
- eine Co-Extrusionseinheit (220) zum Extrudieren eines halbfertigen Mehrfachprofils (110), aufweisend:
- zumindest einen Hauptextruder (20₁), der so konfiguriert ist, dass er ein entsprechendes erstes Polymermaterial extrudiert;
- einen sekundären Extruder (20₂), der so konfiguriert ist, dass er ein zweites Polymermaterial extrudiert;
- zumindest einen Hauptzuführkanal (206₁);
- einen sekundären Zuführkanal (206₂); und
- eine Formplatte (208);
wobei der zumindest eine Hauptzuführkanal (206₁) einen entsprechenden Hauptextruder (20₁) mit der Formplatte (208) verbindet;
wobei der sekundäre Zuführkanal (206₂) den sekundären Extruder (20₂) mit der Formplatte (208) verbindet;
wobei die Formplatte (208) innere Kanäle und eine geformte Öffnung (210) aufweist;
wobei die geformte Öffnung (210) der Formplatte (208) zumindest zwei Arbeitszonen (280), die so konfiguriert sind, dass sie eine entsprechende Anzahl an Profilen (100) definieren, und zumindest eine Servicezone (282), die sich zwischen den Arbeitszonen (28) befindet und so konfiguriert ist, dass sie zumindest eine Einwegraupe (102) definiert, aufweist;
wobei jeder Hauptzuführkanal (206₁) und die inneren Kanäle der Formplatte (208) so konfiguriert sind, dass sie das entsprechende erste Polymermaterial den zumindest zwei Arbeitszonen (280) zuführen;
wobei der sekundäre Zuführkanal (206₂) und die inneren Kanäle der Formplatte (208) so konfiguriert sind, dass sie das zweite Polymermaterial der zumindest einen Servicezone (282) zuführen, so dass die geformte Öffnung (210) in ihrer Gesamtheit so konfiguriert ist, dass sie ein halbfertiges Mehrfachprofil (110) definiert, das zumindest zwei Profile (100) aufweist, die aus zumindest einem ersten Polymermaterial bestehen und durch zumindest eine Einwegraupe (102) miteinander verbunden sind, die aus einem zweiten Polymermaterial besteht; und
- eine Trennstation (60), die sich stromabwärts von der Co-Extrusionseinheit (220) befindet und so konfiguriert ist, dass sie die zumindest eine Einwegraupe (102) von dem halbfertigen Mehrfachprofil (110) durch einen seitlichen Ziehvorgang in Bezug auf die Richtung des halbfertigen Mehrfachprofils (110) entfernt, um die zumindest zwei separaten Profile (100) zu erhalten; **dadurch gekennzeichnet, dass** das zumindest eine Polymermaterial für die Extrusion der Profile (100) und das Polymermaterial für die Extrusion der Einwegraupe (102) zusammen entlang einer Kontaktsektion (l) in der Formplatte (208) haften, die eine Länge hat, die zwischen einem Wert, der größer als Null ist, und einem Wert von weniger als 5 mm variiert, um keine strukturelle Verbindung in dem halbfertigen Mehrfachprofil (110) zu bilden.

2. Co-Extrusionsanlage (18) nach Anspruch 1, wobei die Co-Extrusionseinheit (220) zwei Hauptextruder (20₁) aufweist, die jeweils so konfiguriert sind, dass sie ein entsprechendes erstes Polymermaterial extrudieren und mit einem entsprechenden Hauptzuführkanal (206₁) versehen sind, wobei die Hauptzuführkanäle (206₁) und die inneren Kanäle der Formplatte (208) so konfiguriert sind, dass sie die ersten Polymermaterialien den zumindest zwei Arbeitszonen (280) der geformten Öffnung (210) zuführen, so dass die geformte Öffnung (210) in ihrer Gesamtheit so konfiguriert ist, dass sie ein halbfertiges Mehrfachprofil (110) definiert, das zumindest zwei Profile (100) aufweist, die aus unterschiedlichen ersten Polymermaterialien bestehen und durch zumindest eine Raupe (102) miteinander verbunden sind, die aus dem zweiten Polymermaterial besteht.

3. Co-Extrusionsanlage (18) nach Anspruch 1 oder 2, wobei das erste Polymermaterial, das durch den zumindest einen Hauptextruder (20₁) extrudiert wird, von dem zweiten Polymermaterial, das durch den sekundären Extruder (20₂) extrudiert wird, unterschiedlich ist.

4. Co-Extrusionsanlage (18) nach Anspruch 3, wobei die Co-Extrusionseinheit (220) zumindest einen Hauptextruder (20₁) aufweist und wobei der Zuführkanal (206₂) des sekundären Extruders (20₂) und die inneren Kanäle der Formplatte (208) so konfiguriert sind, dass sie das zweite Polymermaterial den zumindest zwei Arbeitszonen (280) der geformten Öffnung (210) zuführen, so dass die geformte Öffnung (210) in ihrer Gesamtheit so konfiguriert ist, dass sie ein halbfertiges Mehrfachprofil (110) definiert, das zumindest zwei Profile (100) aufweist, die aus unterschiedlichen Polymermaterialien bestehen, die durch den zumindest einen Hauptextruder und den sekundären Extruder extrudiert werden und durch zumindest eine Einwegraupe (102) miteinander verbunden sind, die aus einem zweiten Polymermaterial besteht, das durch den sekundären Extruder extrudiert wird.

5. Co-Extrusionsanlage (18) nach Anspruch 1, wobei das erste Polymermaterial, das durch den zumindest einen Hauptextruder (20₁) extrudiert wird, dasselbe ist wie das zweite Polymermaterial, das durch den sekundären Extruder (20₂) extrudiert wird.

6. Co-Extrusionsanlage (18) nach einem der vorgenannten Ansprüche, wobei die zumindest zwei Profile (100) dünne Profile für elektrische Haushaltsgeräte sind, vorzugsweise Glasverblendungen.

7. Co-Extrusionsanlage (18) nach einem der vorgenannten Ansprüche, wobei die Trennstation (60) ein motorgetriebenes Sperrrad zum Aufwickeln der Einwegraupe (102) aufweist, die von dem halbfertigen Mehrfachprofil (110) entfernt wird.

8. Co-Extrusionsanlage (18) nach einem der vorgenannten Ansprüche, ferner aufweisend eine oder mehrere der folgenden Stationen:
- eine Kalibrierungsstation (30; 340), die so konfiguriert ist, dass sie die äußere Oberfläche des halbfertigen Mehrfachprofils (110) veredelt;
- eine Kühlstation (40; 340), die so konfiguriert ist, dass sie die Polymermaterialien auf eine Temperatur kühlt, die ausreichend niedrig ist, um das halbfertige Mehrfachprofil (110) zu festigen; und
- eine Ziehstation (50), die so konfiguriert ist, dass sie eine Zugkraft auf das halbfertige Mehrfachprofil (110) anwendet,
wobei die Kalibrierungs- und Kühlstationen zwei separate Stationen (30, 40) oder in einer einzigen Kalibrierungs- und Kühlstation (340) kombiniert sein können.

9. Co-Extrusionsanlage (18) nach einem der vorgenannten Ansprüche, ferner aufweisend, stromabwärts von den Stationen, eine Station zum Zurechtschneiden der zumindest zwei separaten Profile (100).

10. Verfahren zum kontinuierlichen Co-Extrudieren von zumindest zwei separaten Profilen (100), das unter Verwendung der Co-Extrusionsanlage (18) nach einem der vorgenannten Ansprüche durchgeführt wird, wobei das Verfahren die folgenden Schritte aufweist:
- Extrudieren eines halbfertigen Mehrfachprofils (110), aufweisend zumindest zwei Profile (100) aus zumindest einem ersten Polymermaterial und miteinander verbunden durch zumindest eine Einwegraupe (102), die aus einem zweiten Polymermaterial besteht, wobei das zumindest eine erste Polymermaterial und das zweite Polymermaterial entlang einer Kontaktsektion (l) in der Formplatte (208) aneinander haften, die eine Länge aufweist, die zwischen einem Wert, der größer als Null ist, und einem Wert unter 5 mm variabel ist, so dass keine strukturelle Verbindung in dem halbfertigen Mehrfachprofil (110) gebildet wird; und
- Entfernen der zumindest einen Einwegraupe (102) von dem halbfertigen Mehrfachprofil (110) durch einen seitlichen Ziehvorgang in Bezug auf die Richtung des halbfertigen Mehrfachprofils (110), um die zumindest zwei separaten Profile (100) zu erhalten.

11. Co-Extrusionsverfahren nach Anspruch 10, wobei der Extrusionsschritt die Extrusion eines halbfertigen Mehrfachprofils (110) beinhaltet, das zumindest zwei Profile (100) aufweist, die aus ersten Polymermaterialien bestehen, die identisch oder unterschiedlich sind und durch zumindest eine Einwegraupe (102), die aus dem zweiten Polymermaterial besteht, miteinander verbunden sind.

12. Co-Extrusionsverfahren nach Anspruch 11, wobei das zweite Polymermaterial von dem ersten Polymermaterial unterschiedlich oder mit diesem identisch ist.

13. Verfahren nach einem der Ansprüche 10 bis 12, ferner aufweisend einen oder mehrere der folgenden Schritte:
- Veredeln der äußeren Oberfläche des halbfertigen Mehrfachprofils (110);
- Kühlen des halbfertigen Mehrfachprofils (110), um die Polymermaterialien auf eine Temperatur zu kühlen, die ausreichend niedrig ist, um das halbfertige Mehrfachprofil (110) zu festigen; und
- Ausüben einer Zugkraft auf das halbfertige Mehrfachprofil (110).

14. Verfahren nach einem der Ansprüche 10 bis 13, ferner aufweisend, auf die vorherigen Schritte folgend, einen weiteren Schritt des Zurechtschneidens der zumindest zwei separaten Profile.

## Revendications

1. Installation de co-extrusion (18) pour extruder au moins deux profilés séparés (100), comprenant :
- une unité de co-extrusion (220) pour extruder un profilé multiple semi-fini (110), comprenant :
- au moins une extrudeuse principale (20₁) configurée pour extruder un premier matériau polymère respectif ;
- une extrudeuse secondaire (20₂) configurée pour extruder un second matériau polymère ;
- au moins un canal d'alimentation principal (206₁) ;
- un canal d'alimentation secondaire (206₂) ; et
- une matrice de plaque (208) ;
dans lequel le au moins un canal d'alimentation principal (206₁) relie une extrudeuse principale respective (20₁) à la matrice de plaque (208) ;
dans lequel le canal d'alimentation secondaire (206₂) relie l'extrudeuse secondaire (20₂) à la matrice de plaque (208) ;
dans lequel la matrice de plaque (208) comprend des canaux internes et une ouverture façonnée (210) ;
dans lequel l'ouverture façonnée (210) de la matrice de plaque (208) comprend au moins deux zones de travail (280) configurées pour définir un nombre correspondant de profilés (100) et au moins une zone de service (282) située entre les zones de travail (28) et configurée pour définir au moins un cordon jetable (102) ;
dans lequel chaque canal d'alimentation principal (206₁) et les canaux internes de la matrice de plaque (208) sont configurés pour alimenter le premier matériau polymère respectif vers les au moins deux zones de travail (280) ;
dans lequel le canal d'alimentation secondaire (206₂) et les canaux internes de la matrice de plaque (208) sont configurés pour alimenter le second matériau polymère vers la au moins une zone de service (282) ; de sorte que l'ouverture formée (210) dans son ensemble est configurée pour définir un profilé multiple semi-fini (110) comprenant au moins deux profilés (100), faits d'au moins un premier matériau polymère et joints ensemble par au moins un cordon jetable (102) fait d'un second matériau polymère ;
et
- une station de séparation (60) située en aval de l'unité de co-extrusion (220) et configurée pour retirer le au moins un cordon jetable (102) du profilé multiple semi-fini (110) au moyen d'une action de traction latérale par rapport à la direction du profilé multiple semi-fini (110) de manière à obtenir lesdits au moins deux profilés séparés (100) ;
**caractérisé en ce que** le au moins un matériau polymère pour l'extrusion des profilés (100) et le matériau polymère pour l'extrusion du cordon jetable (102) adhèrent ensemble le long d'une section de contact (*l*) au sein de la matrice de plaque (208) présentant une longueur variable entre une valeur supérieure à zéro et une valeur inférieure à 5 mm de manière à ne pas former une liaison structurelle dans le profilé multiple semi-fini (110).

2. Installation de co-extrusion (18) selon la revendication 1, dans laquelle l'unité de co-extrusion (220) comprend deux extrudeuses principales (201) configurées chacune pour extruder un premier matériau polymère respectif et munies d'un canal d'alimentation principal respectif (206₁), dans lequel lesdits canaux d'alimentation principaux (206₁) et lesdits canaux internes de la matrice de plaque (208) sont configurés pour alimenter les premiers matériaux polymères auxdites au moins deux zones de travail (280) de l'ouverture façonnée (210) de sorte que l'ouverture façonnée (210) dans son ensemble soit configurée pour définir un profilé multiple semi-fini (110) comprenant au moins deux profilés (100) qui sont faits de différents premiers matériaux polymères et sont joints ensemble par au moins un cordon (102) fait du second matériau polymère.

3. Installation de co-extrusion (18) selon la revendication 1 ou 2, dans laquelle le premier matériau polymère extrudé par ladite au moins une extrudeuse principale (20₁) est différent du second matériau polymère extrudé par ladite extrudeuse secondaire (20₂).

4. Installation de co-extrusion (18) selon la revendication 3, dans laquelle l'unité de co-extrusion (220) comprend au moins une extrudeuse principale (20₁) et dans laquelle le canal d'alimentation (206₂) de l'extrudeuse secondaire (20₂) et les canaux internes de la matrice de plaque (208) sont configurés pour alimenter le second matériau polymère auxdites au moins deux zones de travail (280) de l'ouverture façonnée (210) de sorte que l'ouverture façonnée (210) dans son ensemble est configurée pour définir un profilé multiple semi-fini (110) comprenant au moins deux profilés (100) qui sont faits de matériaux polymères différents extrudés par ladite au moins une extrudeuse principale et par ladite extrudeuse secondaire et sont joints ensemble par au moins un cordon jetable (102) fait d'un second matériau polymère extrudé par ladite extrudeuse secondaire.

5. Installation de co-extrusion (18) selon la revendication 1, dans laquelle le premier matériau polymère extrudé par ladite au moins une extrudeuse principale (20₁) est le même que le second matériau polymère extrudé par ladite extrudeuse secondaire (20₂).

6. Installation de co-extrusion (18) selon l'une quelconque des revendications précédentes, dans laquelle lesdits au moins deux profilés (100) sont des profilés fins pour appareils électroménagers, de préférence des garnitures de verre.

7. Installation de co-extrusion (18) selon l'une quelconque des revendications précédentes, dans laquelle ladite station de séparation (60) comprend une roue à rochet entraînée par un moteur pour enrouler le cordon jetable (102) retiré du profilé multiple semi-fini (110).

8. Installation de co-extrusion (18) selon l'une quelconque des revendications précédentes, comprenant en outre une ou plusieurs des stations suivantes :
- une station de calibrage (30 ; 340) configurée pour finir la surface extérieure du profilé multiple semi-fini (110) ;
- une station de refroidissement (40 ; 340), configurée pour refroidir les matériaux polymères à une température suffisamment basse pour consolider le profilé multiple semi-fini (110) ; et
- une station de traction (50), configurée pour appliquer une force de traction au profilé multiple semi-fini (110),
dans lequel les stations de calibrage et de refroidissement peuvent être deux stations séparées (30,40) ou combinées en une seule station de calibrage et de refroidissement (340).

9. Installation de co-extrusion (18) selon l'une quelconque des revendications précédentes, comprenant en outre, en aval desdites stations, une station de découpe à la taille desdits au moins deux profilés séparés (100).

10. Procédé de co-extrusion en continu d'au moins deux profilés séparés (100) réalisé en utilisant l'installation de co-extrusion (18) selon l'une quelconque des revendications précédentes, le procédé comprenant les étapes suivantes :
- extruder un profilé multiple semi-fini (110) comprenant au moins deux profilés (100) faits d'au moins un premier matériau polymère et joints ensemble par au moins un cordon jetable (102) fait d'un second matériau polymère, dans lequel ledit au moins un premier matériau polymère et ledit second matériau polymère adhèrent ensemble le long d'une section de contact (l) au sein de la matrice de plaque (208) présentant une longueur variable entre une valeur supérieure à zéro et une valeur inférieure à 5 mm de façon à ne pas former une liaison structurelle dans le profilé multiple semi-fini (110) ; et
- retirer au moyen d'une action de traction latérale par rapport à la direction du profilé multiple semi-fini (110) le au moins un cordon jetable (102) du profilé multiple semi-fini (110) de manière à obtenir lesdits au moins deux profilés séparés (100).

11. Procédé de co-extrusion selon la revendication 10, dans lequel ladite étape d'extrusion implique l'extrusion d'un profilé multiple semi-fini (110) comprenant au moins deux profilés (100) faits de premiers matériaux polymères qui sont identiques ou différents et sont joints ensemble par au moins un cordon jetable (102) fait du second matériau polymère.

12. Procédé de co-extrusion selon la revendication 11, dans lequel ledit second matériau polymère est identique ou différent desdits premiers matériaux polymères.

13. Procédé selon l'une quelconque des revendications 10 à 12, comprenant en outre une ou plusieurs des étapes suivantes :
- finition de la surface extérieure du profilé multiple semi-fini (110) ;
- refroidissement du profilé multiple semi-fini (110) de manière à refroidir les matériaux polymères à une température suffisamment basse pour consolider le profilé multiple semi-fini (110) ; et
- application d'une force de traction sur le profilé multiple semi-fini (110).

14. Procédé selon l'une quelconque des revendications 10 à 13, comprenant en outre, en aval desdites étapes, une étape supplémentaire de découpe à la taille desdits au moins deux profilés séparés.
